# EUROPÄISCHE PATENTANMELDUNG

(11) **EP 0 783 082 A1**
(43) Veröffentlichungstag der Anmeldung: **09.07.1997**
(21) Anmeldenummer: 96120826.1
(22) Anmeldetag: 23.12.1996
(51) Int. Cl.: F16J 15/32, B29C 33/00

(54) **Dichtungsring und Verwendung desselben**

(30) Priorität: 04.01.1996 DE 19600141
(71) Anmelder: Parker Hannifin GmbH, Geschäftsbereich ERMETO, 33659 Bielefeld (DE)
(72) Erfinder: Müller, Kurt, 33659 Bielefeld (DE)
(74) Vertreter: Wolff, Michael, Dipl.-Phys.

(57) **Zusammenfassung**

**Gegenstand** der Erfindung sind zwei Dichtungen und eine Verwendung derselben.

**Stand der Technik** sind Nut- und Lippen-Ringe, deren Rohlinge nach der Entnahme aus dem Herstellwerkzeug noch Grate oder Anspritzpunkte aufweisen, die durch Nachbearbeitung abzutragen sind.

**Nachteil** dieser Abtragung ist das Bestehenbleiben von Resten der Grate bzw. Anspritzpunkte oder eine sogenannte Entgratung, das heißt, das Entstehen eines gestörten, z.B. abgeflachten Oberflächenbereiches.

**Aufgabe** der Erfindung ist das Vermeiden der Nachbearbeitung des Rohlings, der keine störende Oberflächenanomalien aufweisen, also den fertigen Ring darstellen soll.

**Lösung** dieser Aufgabe ist je nach dem, ob der Rohling nun einen oder zwei umlaufende Grate oder zusätzlich Anspritzpunkte aufweist, die vertiefte Anordnung jedes Grates in einer von zwei Hilfsnuten bzw. eines Grates in einer der beiden Hilfsnuten und aller Anspritzpunkte in der anderen Hilfsnut, wobei beide Hilfsnuten ein Nut- oder Lippen-Profil des Dichtungsringes taillieren.

**Vorteil** dieser Lösung ist der Wegfall der Nachbearbeitung des Rohlings, da Grate an Dichtflächen und Anspritzpunkte in den Hilfsnuten verschwinden; durch deren Versenkung darin wird bei Verwendung von Synthesekautschuk als Werkstoff eine Verletzung der Vulkanisationshaut des Ringes durch Nachbearbeitung seines Rohlings vermieden mit der Folge verminderten Ringverschleißes.

## Beschreibung

Die Erfindung betrifft gummielastische oder thermoplastischelastische Dichtungsringe mit Nut- oder Lippen-förmigem Profil gemäß Oberbegriff des Anspruches 1 bzw. 2.

Bei den bisher bekannten, meist fluidtechnisch gebrauchten Nut-od.Lippen-Ringen der zuvor genannten Arten müssen die beim Trennen der Hälften des Spritz- oder Gießwerkzeuges noch am Ring vorhandenen Grate (filmähnliches Material) und Anspritzpunkte (noppenähnliches Material) durch Nachbearbeitung des Ringes zum fertigen Dichtungsring abgetragen werden. Dabei führt eine ungenügende Nachbearbeitung zum Verbleib eines Restes des Grates bzw. Anspritzpunktes und eine übermäßige Nachbearbeitung zur übermäßigen Entgratung, bei der ein abgeflachter und oft rauher Oberflächenbereich entsteht.

Der Erfindung liegt daher die Aufgabe zugrunde, die zuvor genannten Nachteile vermeidende Dichtungsringe der eingangs genannten Art zu schaffen, welche keine Nachbearbeitung des Ringes erfordern und dennoch weder störende Grate bzw.

Anspritzpunkte noch Entgratungen aufweisen.

Diese Aufgabe ist erfindungsgemäß durch die Gegenstände des Anspruches 1 bzw. 2 gelöst.

Dadurch, daß jeder Grat oder Anspritzpunkt vollständig in einer Hilfsnut liegt, tritt dieses Überschußmaterial an der äußeren Oberfläche des Dichtungsringes insbesondere auf einer Dichtfläche überhaupt nicht in Erscheinung und stört deshalb die Dichteigenschaften trotz seiner Existenz nicht im mindesten, so daß seine Entfernung überflüssig ist.

Als besonderer Vorteil der erfindungsgemäßen Dichtungsringe wird angesehen, daß die bei Synthesekautschuk an der Dichtfläche besonders wichtige Vulkanisationshaut des nicht mechanisch nachbearbeiteten Fertigteils erhalten bleibt. Infolgedessen verschleißt ein oberflächlich glatter erfindungsgemäßer Dichtungsring weniger als herkömmliche Dichtungsringe mit teilweiser oder vollständiger Entgratung.

Bei bevorzugten Ausführungsformen der erfindungsgemäßen Dichtungsringe liegen die beiden Hilfsnuten einander radial gegenüber.

Bei einer Variante des erfindungsgemäßen Dichtungsringes ist die einen Anspritzpunkt enthaltende Hilfsnut auf eine Oberflächenvertiefung je Anspritzpunkt verkürzt, falls sie keinen Trenngrat enthält.

Nebengegenstand der Erfindung ist auch die Verwendung der erfindungsgemäßen Dichtungsringe in der Weise, daß wenigstens eine Hilfsnut (enthält einen Trenngrat) oder Vertiefung (enthält einen Anspritzpunkt) als Schmierstoffdepot genutzt wird.

Bekannt war aus der US-PS 3.768.819 ein elastischer Dichtungsring mit U-förmigem Querschnitt und zwei getrennten Lippen (1), die durch die freien Enden der zwei U-Schenkel gebildet sind, sowie zwei Dichtungsflächen (2), die von der US-Basis weg von den Lippen (1) abstehen, und einer zurückgesetzten Fläche (4), welche die Dichtungsflächen (2) trennt.

Ein Grat (5), der entlang der Mitte der Umfangsfläche (4) verläuft und gebildet ist in der Ebene, welche die Hälften des Spritz- oder Gießwerkzeuges trennt, kann leicht entgratet werden, ohne die Dichtungsflächen (2) zu beeinträchtigen. - In der weiteren Beschreibung findet sich kein Hinweis auf ein Stehenlassen des Grates (5) in der Vertiefung zwischen den beiden Dichtungsflächen (2).

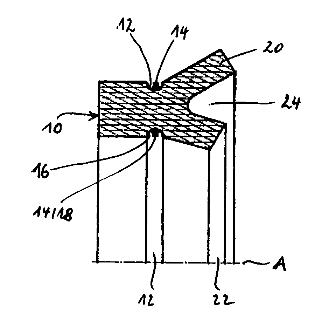

Im Folgenden ist die Erfindung anhand einer durch die Zeichnung beispielhaft dargestellten Ausführungsform eines erfindungsgemäßen Dichtungsringes und zugleich einer Variante desselben im einzelnen erläutert. Es zeigt sich in schematischer Darstellung ein halber achsparalleler Längsschnitt durch die Ausführungsform bzw. Variante.

Das Ausführungsbeispiel ist ein Lippen-Ring 10, an dessen Profil-Taille zwei koaxiale, je halbrund profilierte, die Achse A umlaufende Hilfsnuten 12 ausgespart sind, an deren Grund ein umlaufender Grat 14 sitzt, der nicht aus der Hilfsnut 12 herausragt.

Die Variante des Ausführungsbeispiels ist der gleiche Lippen-Ring 10 mit einer die eine Hilfsnut 12 stellenweise ersetzenden Vertiefung 16. Am Grund dieser Oberflächenvertiefung 16 sitzt ein Anspritzpunkt 18, der nicht herausragt.

In beiden Fällen eines Lippen-Ringes 10 mit zwei Dichtungslippen 20 und 22, die zusammen eine Ringnut 24 bilden, sind die verschieden großen Radien der beiden umlaufenden Trenn-Grate 14, von denen einer durch mindestens einen Anspritzpunkt 18 ersetzt sein kann, größer bzw. kleiner als der Radius des Grundes der V-Nut 24 zwischen den beiden ringförmigen Lippen 20 und 22, von denen die umlaufende Dichtungslippe 20 mit dem größten Außendurchmesser ihrer Dichtkante statisch dichten soll, während die andere Lippe 22 mit dem kleineren Außendurchmesser dynamisch zu dichten hat.

"Radien" und "Radius" bedeutet die bzw. den halben Durchmesser der ringförmigen Hilfsnuten 12 bzw. V-Nut 24, gemessen in den von der Achse A senkrecht durchstoßenen beiden Radialebenen, in denen diese Nuten 12 bzw. Nut 24 um die Achse A läuft, bezüglich deren die Hilfsnuten 12 quasi konzentrisch angeordnet sind, so daß sie den Dichtungsring 10 taillieren.

## Patentansprüche

1. Gummielastischer Dichtungsring für Stangen oder Kolben, mit Nut- oder Lippen-förmigem Profil und mindestens einem umlaufenden Trenn-Grat (14) je hinter einer von zwei umlaufenden Dichtungslippen (20 und 22), die eine Ringnut (24) bilden, dadurch **gekennzeichnet**, daß jeder Trenn-Grat (14) in einer umlaufenden Hilfsnut (12) vertieft angeordnet ist, welche axial hinter den beiden Lippen (20 und 22) angeordnet sind.

2. Thermoplastisch-elastischer Dichtungsring mit Nut- oder Lippen-förmigem Profil, mit einem umlaufenden TrennGrat (14) hinter einer von zwei umlaufenden Dichtungslippen (20 und 22), die eine Ringnut (24) bilden, und mit wenigstens einem Anspritzpunkt (18) an der Oberfläche, dadurch **gekennzeichnet**, daß der Trenn-Grat (14) und alle Anspritzpunkte (18) in je einer von zwei umlaufenden Hilfsnuten (12) oder der Trenn-Grat (14) in einer umlaufenden Hilfsnut (12) und jeder Anspritzpunkt (18) in einer Oberflächenvertiefung (16) vertieft angeordnet sind, welche axial hinter den beiden Lippen (20 und 22) angeordnet sind.

3. Dichtungsring nach Anspruch 1 oder 2, dadurch gekennzeichnet, daß die senkrechten Abstände zur Achse (A) der zwei Hilfsnuten (12) oder von Hilfsnut (12) und Vertiefung (16) größer bzw. kleiner, oder umgekehrt, sind als der Abstand des Grundes der Ringnut (24) zur Achse (A).

4. Dichtungsring nach einem der Ansprüche 1 bis 3, dadurch gekennzeichnet, daß die beiden Hilfsnuten (12) einander radial gegenüberliegen.

5. Verwendung des Dichtringes gemäß einem der Ansprüche 1 bis 4, in der Weise, daß wenigstens eine Hilfsnut (12) oder Vertiefung (16) als Schmiermittelstoffdepot genutzt wird.
